# EUROPÄISCHE PATENTSCHRIFT

(11) **EP 3 707 056 B1**
(45) Veröffentlichungstag und Bekanntmachung des Hinweises auf die Patenterteilung: **10.08.2022**
(21) Anmeldenummer: 18789344.1
(22) Anmeldetag: 11.10.2018
(51) Int. Cl.: B62D 5/04

(54) **ELEKTROMECHANISCHES LENKANTRIEBSSYSTEM ZUM BEREITSTELLEN EINER LENKUNTERSTÜTZUNG FÜR EIN LENKSYSTEM**
ELECTROMECHANICAL STEERING DRIVE SYSTEM FOR MAKING AVAILABLE STEERING ASSISTANCE FOR A STEERING SYSTEM
SYSTÈME D'ENTRAÎNEMENT DE DIRECTION ÉLECTROMÉCANIQUE POUR LA FOURNITURE D'UNE ASSISTANCE À LA DIRECTION POUR UN SYSTÈME DE DIRECTION

(30) Priorität: 08.11.2017 DE 102017219816
(43) Veröffentlichungstag der Anmeldung: 16.09.2020
(73) Patentinhaber: Volkswagen Aktiengesellschaft, 38440 Wolfsburg (DE)
(72) Erfinder: KREIS, Christopher, 38126 Braunschweig (DE); SACHS, Tobias, 38176 Wendeburg (DE); SCHMIDT-SCHÄFER, Sebastian, 99998 Weinbergen OT Bollstedt (DE)
(86) Internationale Anmeldenummer: PCT/EP2018/077667
(87) Internationale Veröffentlichungsnummer: WO 2019/091690

(56) Entgegenhaltungen:
- US-A1- 2017 217 481

## Beschreibung

### Technisches Gebiet

Die Erfindung betrifft Lenksysteme, insbesondere Lenksysteme mit elektromechanischem Lenkantrieb sowie Maßnahmen zum Erhöhen der Ausfallsicherheit eines elektromechanischen Lenkantriebssystems.

### Technischer Hintergrund

Lenksysteme in herkömmlichen Kraftfahrzeugen weisen in der Regel eine elektromechanische Lenkunterstützung auf, die einen Fahrer bei der Lenkung durch einen Lenkeingriff unterstützt. Dazu weisen derartige Lenksysteme einen Lenkantrieb auf, der bei entsprechender Ansteuerung eine Lenkunterstützungskraft oder ein Lenkunterstützungsmoment in das Lenksystem einbringt und eine Lenkbewegung unterstützt oder gar selbsttätig ausführt.

Die Funktion des Lenksystems in einem Kraftfahrzeug ist in höchstem Maße sicherheitskritisch, da insbesondere bei höheren Fahrzeuggeschwindigkeiten bereits geringste Abweichungen einer Lenkbewegung von einer Lenkeingriffsvorgabe zu einem unerwünschten Fahrzeugverhalten führen können, das Insassen und/oder das Kraftfahrzeug gefährden kann.

Das bisherige Sicherheitskonzept von elektromechanischen Lenksystemen sieht vor, dass die Lenkunterstützung im Falle eines erkannten Fehlers abgeschaltet wird und der Fahrer das Lenken des Kraftfahrzeugs ohne die elektromechanische Lenkunterstützung weiterführt. Soll jedoch in einem solchen Lenksystem eine autonome Fahrfunktion umgesetzt werden, sind erhöhte Sicherheitsanforderungen erforderlich.

Es kann nicht davon ausgegangen werden, dass das Lenken des Kraftfahrzeugs unmittelbar nach dem Auftreten eines Fehlers durch den Fahrer übernommen werden kann, da dieser abgelenkt ist oder womöglich schläft. Daher muss das Lenksystem sicherstellen, dass trotz Vorliegen einer Fehlfunktion oder eines Ausfalls einer Komponente des Lenksystems die autonome Fahrfunktion für eine bestimmte Zeit weiter ausgeführt und das Kraftfahrzeug entsprechend gelenkt wird.

Üblicherweise werden zum Erhöhen der Ausfallsicherheit Komponenten des Lenksystems redundant ausgeführt, so dass bei einem Fehler weiterhin ein funktionsfähiges Teilsystem zur Verfügung steht, durch das zumindest eine reduzierte elektromechanische Lenkunterstützungskraft bereitgestellt werden kann. Jedoch erhöht die Anzahl von Komponenten des Lenksystems wiederum die Ausfallwahrscheinlichkeit, so dass es wünschenswert ist, die erhöhte Ausfallsicherheit mit einer möglichst geringen Anzahl von Komponenten des Lenksystems zur Verfügung zu stellen.

Aus der Druckschrift DE 10 2012 101 006 A1 ist eine elektromechanische Servolenkung mit zwei Teilsystemen bekannt, die jeweils einen Sensor, eine Leistungselektronikeinheit und eine Aktuatoreinheit aufweisen, um eine Redundanz der Servolenkung bereitzustellen. Eine Steuerungselektronik steuert die redundant ausgeführten Teilsysteme an.

Aus der Druckschrift DE 10 2015 116 937 A1 ist ein Verfahren zum Betreiben eines Lenksystems eines Kraftfahrzeugs mit einer Hilfskraftlenkung beschrieben. Die Hilfskraftlenkung umfasst eine Anzahl von Aktorpfaden, die zur Einbringung eines Gesamtunterstützungsmoments dienen. Das Gesamtunterstützungsmoment und Teilunterstützungsmomente für jeden Aktorpfad werden in jedem Aktorpfad ermittelt. Jeder Aktorpfad bezieht sein zugeordnetes Teilunterstützungsmoment von einem als Master aktivierten Aktorpfad.

Aus der Druckschrift DE 10 2015 107 504 A1 ist ein redundant ausgelegtes Lenksystem bekannt. Das Lenksystem umfasst eine erste Teilmaschine mit einem ersten Sensor, einem ersten Analog/Digital-Konverter und einer ersten Steuereinheit und eine zweite Teilmaschine mit einem zweiten Sensor, einem zweiten Analog/Digital-Konverter und einer zweiten Steuereinheit. Es ist ein Kommunikationskanal zwischen dem ersten Sensor und dem zweiten Analog/Digital-Konverter oder zwischen dem erstem Analog/Digital-Konverter und der zweiten Steuereinheit oder zwischen der ersten Steuereinheit und der zweiten Steuereinheit vorgesehen. Dadurch können Teile eines Teilsystems für die Funktionalität der Lenkung benutzt werden, auch wenn das entsprechende Teilsystem von einem Störfall betroffen ist. Somit kann das Lenksystem redundant ausgelegt werden, indem einzelne Elemente des Lenksystems auch mit Teilen von unterschiedlichen Teilsystemen kommunizieren können.

Aus der Druckschrift US2017/217481A1 ist ein Lenksystem mit einem Motor mit zwei unabhängigen Wicklungskreisen und einer Steuereinheit bekannt. Die Steuereinheit weist zwei Subsysteme auf, die unabhängig voneinander die zwei Wicklungskreise ansteuern.

Es ist Aufgabe der vorliegenden Erfindung, ein fehlertolerantes Lenkantriebssystem mit hoher Ausfallsicherheit für ein Lenksystem mit einem elektromechanischen Lenkantrieb bereitzustellen.

### Offenbarung der Erfindung

Diese Aufgabe wird durch das Lenkantriebssystem für ein Lenksystem eines Kraftfahrzeugs gemäß Anspruch 1 sowie durch das Lenksystem gemäß dem nebengeordneten Anspruch gelöst.

Weitere Ausgestaltungen sind in den abhängigen Ansprüchen angegeben.

Gemäß einem ersten Aspekt ist ein Lenkantriebssystem für ein Lenksystem eines Kraftfahrzeugs vorgesehen, umfassend:
- ein erstes Steuergerät zum Ansteuern eines ersten Wicklungskreises eines Lenkantriebsmotors mit einer Testschaltung, wobei die Testschaltung ausgebildet ist, ein definiertes wechselndes, insbesondere ein periodisches Testsignal bereitzustellen;
- ein zweites Steuergerät zum Ansteuern eines zweiten Wicklungskreises des Lenkantriebsmotors, wobei eine Testsignalempfangsschaltung des zweiten Steuergeräts ausgebildet ist, das Testsignal zu empfangen, wobei das zweite Steuergerät ausgebildet ist, den Lenkantriebsmotor abhängig von dem Testsignal anzusteuern,
wobei ein Lagesensor zur Erfassung der Rotorlage vorgesehen ist, wobei der Lagesensor einen Primärkreis, durch den mithilfe eines Ansteuersignals ein Magnetfeld in einem mit einem Rotor des Lenkantriebsmotors verbundenen weichmagnetischen Element eingeprägt wird, und einen Sekundärkreis aufweist, der mindestens eine Magnetfeldsensoreinheit aufweist, wobei das erste und das zweite Steuergerät mit dem Lagesensor verbunden sind, um jeweils eine Lageinformation zu empfangen, wobei das erste und das zweite Steuergerät ausgebildet sind, eine Ansteuerung des jeweiligen Wicklungskreises abhängig von einer ermittelten Lageinformation, insbesondere durch Bereitstellen eines rotorlageabhängigen Kommutierungsmusters, auszuführen, wobei das erste Steuergerät ausgebildet ist, um das Ansteuersignal für den Primärkreis des Lagesensors bereitzustellen, und wobei das erste und das zweite Steuergerät mit der mindestens einen Magnetfeldsensoreinheit verbunden sind, um die Lageinformation zu erfassen.

Insbesondere kann das zweite Steuergerät weiterhin ausgebildet sein, um abhängig von einem Vorliegen oder einem Nicht-Vorliegen des definierten Testsignals den zweiten Wicklungskreis anzusteuern.

Eine Idee des obigen Verfahrens besteht darin, ein bisheriges Lenkantriebssystem, das zum Bereitstellen einer Lenkunterstützung und weiterer Lenkfunktionen ausgebildet ist, so zu erweitern, dass das Lenkantriebssystem für eine autonome Fahrfunktion nutzbar ist. Da eine autonome Fahrfunktion einen hohen Grad an Ausfallsicherheit des verwendeten Lenkantriebssystems fordert, ist es dazu notwendig, eine Redundanz von Komponenten des Lenkantriebssystems bereitzustellen, so dass der Betrieb des Lenksystems auch bei Ausfall einer der Komponenten des Lenkantriebssystems gewährleistet ist.

Der Lenkantrieb als elektronisch kommutierter Antrieb vorgesehen und kann insbesondere in Form einer Synchronmaschine ausgebildet sein. Der Lenkantrieb weist zur Bereitstellung einer Redundanz elektrisch getrennte Wicklungskreise mit Phasenwicklungen auf, die jeweils auf einen insbesondere gemeinsamen permanentmagneterregten Rotor wirken, um diesen anzutreiben. Die Wicklungskreise werden jeweils durch eines der Steuergeräte angesteuert.

Weiterhin kann das Testsignal mit einer Frequenz und/oder Phasenlage bereitgestellt wird, die der Frequenz bzw. der Phasenlage des Ansteuersignals für den Primärkreis des Lagesensors entspricht, so dass die Erfassung der Rotorlage in dem zweiten Steuergerät basierend auf der Frequenz bzw. Phasenlage des Ansteuersignals durchgeführt wird.

Es kann vorgesehen sein, dass das erste und das zweite Steuergerät ausgebildet sind, um die Ansteuerung des jeweiligen Wicklungskreises basierend auf einer jeweiligen vorgegebenen Stellgröße durchzuführen.

Im Normalbetriebsfall arbeiten das erste und zweite Steuergerät zur synchronen Ansteuerung der Wicklungskreise des Lenkantriebs basierend auf einer externen Stellmomentenvorgabe (Stellgröße) und einer von einem Lagesensor bereitgestellten Lageinformation, der eine Rotorlage des Rotors angibt.

Der Lagesensor ist aktiv ausgeführt und weist einen Primärkreis auf, um ein definiertes Magnetfeld in das am Rotor angebrachte weichmagnetische Element einzukoppeln. Das eingekoppelte Magnetfeld wird mithilfe von sich in einem Sekundärkreis befindlichen Magnetfeldsensoren (GMR-Sensor, Hall-Sensor) erfasst, so dass diese ein lageabhängiges Magnetfeld erfassen und eine Lageinformation bereitstellen können. Während nur eines der Steuergeräte den Primärkreis ansteuern kann, sind alle Steuergeräte mit dem Sekundärkreis verbunden, sodass die Lageinformation zur Ansteuerung der Wicklungskreise im Normalbetriebsfall jedem der Steuergeräte zur Verfügung steht.

Für eine Fehlerrückmeldung ist es notwendig, dass das erste und das zweite Steuergerät jeweils eine Information darüber erhalten, ob das jeweils andere Steuergerät ordnungsgemäß arbeitet. Dazu ist vorgesehen, dass das erste Steuergerät ein Testsignal bereitstellt, das von dem zweiten Steuergerät empfangen wird. Das Testsignal wird in dem ersten Steuergerät nur dann generiert, wenn das erste Steuergerät ordnungsgemäß arbeitet. Das Testsignal wird in definierter Weise bereitgestellt und ist sich kontinuierlich verändernd, so dass das zweite Steuergerät bei Vorliegen des Testsignals erkennen kann, dass das erste Steuergerät ordnungsgemäß arbeitet. Fällt das Testsignal aus, d.h. es ändert sich nicht oder es wird nicht oder in anderer als in der definierten Weise empfangen, so erkennt dadurch das zweite Steuergerät, dass ein Fehler in dem ersten Steuergerät vorliegt.

Umgekehrt erkennt das erste Steuergerät durch Plausibilisierung des durch das erste Steuergerät gestellten Stellmoments an dem Lenkantrieb und der von dem Rotorlagesensor gemessenen Winkelgeschwindigkeit, dass das zweite Steuergerät nicht ordnungsgemäß arbeitet.

Insbesondere kann das zweite Steuergerät eine Messeinheit aufweisen, um eine elektrische Größe bezüglich Phasensträngen des zweiten Wicklungskreises zu erfassen und eine sensorlose Ermittlung der Rotorlage auszuführen, um eine entsprechende Lageinformation bereitzustellen. Sensorlose Lagerfassungen, wie z. B. das Back-EMF-Verfahren, sind aus dem Stand der Technik bekannt und ermöglichen eine Lageerfassung durch Auswerten von Induktionsspannungen in den Phasenwicklungen. Daher kann das zweite Steuergerät mithilfe einer Spannungsmessung von einer oder mehreren der Phasenspannungen des betreffenden Wicklungskreises eine Rotorlage ermitteln. Aufgrund der sensorlosen Regelung sind Einschränkungen in Haptik und Leistung zu erwarten, wobei diese so ausgelegt sind, dass eine sichere Funktion im autonomen Fahrbetrieb gewährleistet werden kann.

Fällt das erste Steuergerät aus, so erkennt dies das zweite Steuergerät dadurch, dass das definierte Testsignal ausbleibt. Da das erste Steuergerät den Primärkreis des Lagesensors ansteuert, ist bei einem nicht ordnungsgemäß arbeitenden ersten Steuergerät nicht zu erwarten, dass der Primärkreis des Lagesensors aktiv betrieben wird. Daher findet nach dem Erkennen eines Ausfalls des ersten Steuergeräts durch das zweite Steuergerät in dem zweiten Steuergerät eine Betriebsartenumschaltung auf eine sensorlose Rotorlageerfassung statt, basierend auf der das Lenkantriebssystem weiter betrieben wird.

Auf diese Weise kann ein Lenkantriebssystem realisiert werden, das eine hohe Ausfallsicherheit hat, wobei bezüglich eines herkömmlichen Lenkunterstützungsantriebs nur ein geringer zusätzlicher Aufwand für Komponenten und Funktionen zum Erreichen einer ausreichenden Redundanz notwendig ist.

Weiterhin kann das zweite Steuergerät ausgebildet sein, abhängig von dem Vorliegen oder Nicht-Vorliegen des Testsignals die Ansteuerung des zweiten Wicklungskreises basierend auf der von dem Lagesensor erfassten Lageinformation oder auf der durch die sensorlose Ermittlung der Rotorlage bestimmten Lageinformation auszuführen.

Insbesondere kann die Testschaltung ausgebildet sein, das Testsignal bereitzustellen, wenn das Ansteuersignal für den Lagesensor durch das erste Steuergerät bereitgestellt wird, und das Testsignal nicht bereitzustellen, wenn das Ansteuersignal für den Lagesensor durch das erste Steuergerät nicht bereitgestellt wird. Auf diese Weise kann dem zweiten Steuergerät mithilfe des Testsignals eine Information bereitgestellt werden, die angibt, ob die über den Lagesensor erfasste Lageinformation gültig ist.

Weiterhin kann das erste Steuergerät ausgebildet sein, eine Fehlfunktion des zweiten Steuergeräts festzustellen, indem das durch die entsprechende Stellgröße vorgegebene Drehmoment zu einem Verlauf der Drehzahl des Lenkantriebsmotors plausibilisiert wird. Die gegenseitige Erkennung von Fehlfunktionen ist notwendig, damit bei Erkennen eines Fehlers in einem der Steuergeräte das jeweils andere Steuergerät einem externen System, insbesondere einer autonomen Fahrfunktion des Kraftfahrzeugs melden können, dass die Redundanz durch die zweite ECU nicht mehr zur Verfügung steht. Die autonome Fahrfunktion wird dann beendet bzw. es wird verhindert, dass diese aktiviert werden kann.

Gemäß einem weiteren Aspekt ist ein Verfahren zum Betreiben des obigen Lenkantriebssystems vorgesehen, mit folgenden Schritten:
- Bereitstellen eines definierten wechselnden, insbesondere periodischen Testsignals durch das erste Steuergerät;
- Empfangen des Testsignals durch das zweite Steuergerät; und
- Ansteuern des Lenkantriebsmotors durch das zweite Steuergerät abhängig von dem definierten Testsignal.

### Kurzbeschreibung der Zeichnungen

Ausführungsformen werden nachfolgend anhand der beigefügten Zeichnungen näher erläutert. Es zeigen:
- Figur 1: eine schematische Darstellung eines Lenksystems mit einem elektromechanischen Lenkantriebssystem;
- Figur 2: eine schematische Darstellung eines Lenkantriebssystems gemäß einer Ausführungsform; und
- Figur 3: ein Flussdiagramm zur Veranschaulichung eines Verfahrens zum Betreiben des Lenkantriebssystems der Figur 2.

### Beschreibung von Ausführungsformen

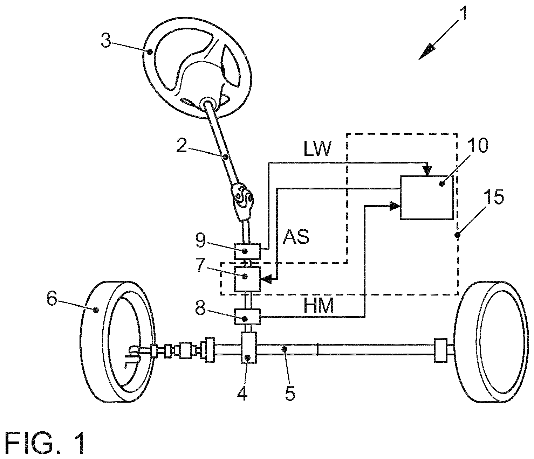

Figur 1 zeigt eine schematische Darstellung eines Lenksystems 1 eines Kraftfahrzeugs. Das Lenksystem 1 umfasst eine Lenksäule 2, die mit einem Lenkrad 3 gekoppelt ist, so dass eine Lenkbewegung, die von einem Fahrer auf das Lenkrad 3 ausgeübt wird, als Handmoment auf die Lenksäule 2 wirkt. Die Lenksäule 2 überträgt das Handmoment auf ein Ritzel 4, das mit einer Zahnstange 5 gekoppelt ist, so dass bei einer Drehung der Lenksäule 2 die Zahnstange 5 linear bewegt wird.

Die Zahnstange 5 ist zwischen zwei gelenkten Rädern 6 des Kraftfahrzeugs angeordnet. Die Räder 6 sind so gehalten, dass sie bei einer linearen Bewegung der Lenkstange 5 um eine Schwenkachse verschwenkt werden.

Die Lenksäule 2 oder die Zahnstange 5 ist weiterhin mit einem Lenkantrieb 7 gekoppelt, um einen Lenkeingriff bereitzustellen. Der Lenkeingriff kann einem Lenkeingriffsmoment, das auf die Lenksäule 2 wirkt, oder einer Lenkeingriffskraft auf die Zahnstange 5 entsprechen. Im vorliegenden, in Figur 1 gezeigten Ausführungsbeispiel wirkt der Lenkantrieb 7 auf die Zahnstange 5.

Es ist weiterhin ein Lenkungssteuersystem 10 vorgesehen, das zur Steuerung des Lenksystems 1 und zur Umsetzung einer Lenkeingriffsvorgabe LV ausgebildet ist. Mithilfe eines Drehmomentsensors 8 an der Lenksäule 2 kann ein über das Lenkrad 3 auf die Lenksäule 2 aufgebrachtes Handmoment bestimmt und eine entsprechende Handmomentangabe HM an das Lenksteuersystem 10 übermittelt werden. Entsprechend kann die Lenksäule 2 mit einem Lenkwinkelsensor 9 versehen sein, der einen Drehwinkel der Lenksäule 2 erfasst und eine entsprechende Lenkwinkelangabe LW an das Lenkungssteuersystem 10 bereitstellt. Anstelle oder zusätzlich zum Lenkwinkelsensor 9 kann ein Lagewinkelsensor vorgesehen sein, der eine exakte Rotorlage eines Lenkunterstützungsmotors des Lenkantriebs 7 bestimmt.

Das Lenkungssteuersystem 10 realisiert eine Vielzahl von Lenkfunktionen, die über eine Ansteuerung des Lenkantriebs 7 in das Lenksystem 1 und den Lenkvorgang eingreifen. Derartige Lenkfunktionen können u. a. eine Fahrbahnrückmeldungsoptimierung, eine Schiefziehkompensation, eine Blockiererkennung, eine Anpassung des Lenkgefühls beim Über-/Untersteuern, eine zahnstangenkraftabhängige Lenkunterstützung, eine Unterstützungskraftregelung und eine optimierte aktive Rückstellung umfassen. Weiterhin kann das Lenkungssteuersystem 10 ausgebildet sein, die Lenkeingriffsvorgabe LV z. B. von einer autonomen Fahrfunktion zu empfangen und entsprechend einen Berechnungsalgorithmus in eine Lenkeingriffsgröße AS zur Ansteuerung des Lenkantriebs 7 des Lenksystems 1 umzusetzen.

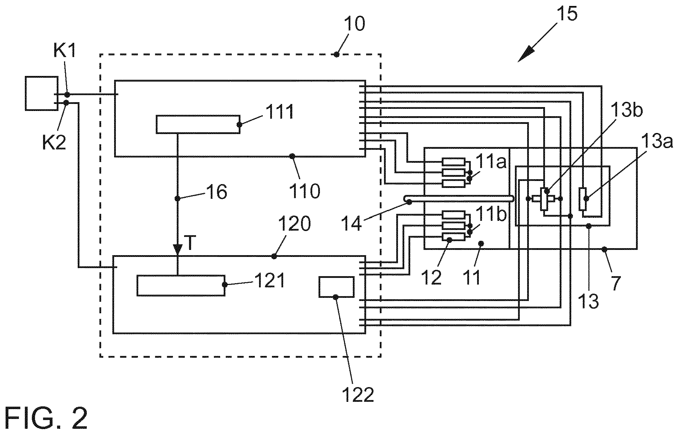

Der Lenkantrieb 7 wird durch das Lenkantriebssystem 15 der Figur 2 gebildet. Figur 2 zeigt eine detailliertere schematische Darstellung eines Lenkantriebssystems 15 mit hoher Ausfallsicherheit. Das Lenkantriebssystem 15 weist einen Lenkantriebsmotor 11 auf. Der Lenkantriebsmotor 11 ist als eine elektronisch kommutierte elektrische Maschine ausgebildet und weist zwei Wicklungskreise 11a, 11b auf, die unabhängig voneinander bestromt werden, um jeweils ein Teilantriebsmoment bereitzustellen. Die beiden Wicklungskreise 11a, 11b sind in einem gemeinsamen Stator angeordnet und wirken auf einen gemeinsamen Rotor, so dass durch die Wicklungskreise 11a, 11b jeweils eine Teilmaschine gebildet wird. Im gezeigten Ausführungsbeispiel weist jeder der Wicklungskreise 11a, 11b drei Phasen mit entsprechenden Phasenwicklungen 12 auf, die in geeigneter Weise durch Anlegen von Phasenspannungen von dem Lenkungssteuersystem 10 bestromt werden.

Dazu umfasst das Lenkungssteuersystem 10 ein erstes Steuergerät 110, das für den ersten Wicklungskreis 11a Phasenspannungen gemäß einem Kommutierungsschema bereitstellt. Das Kommutierungsschema wird abhängig von einer sensorisch erfassten Rotorlage bereitgestellt. Weiterhin umfasst das Lenkungssteuergerät 10 ein zweites Steuergerät 120, das für den zweiten Wicklungskreis 11b Phasenspannungen gemäß einem Kommutierungsschema bereitstellt. Das Kommutierungsschema kann ebenfalls abhängig von einer sensorisch erfassten Rotorlage bereitgestellt werden.

Die Rotorlage wird mithilfe eines Lagesensors 13 ermittelt. Der Lagesensor 13 weist einen Primärkreis auf, der eine Magnetspule 13a umfasst. Die Magnetspule 13a wird durch ein Ansteuersignal bestromt, um in einem anisotrop ausgebildeten weichmagnetischen Element an einer Rotorwelle 14 des Lenkantriebsmotors 11 ein definiertes Sensormagnetfeld mit vorgegebener Charakteristik einzuprägen. Mithilfe eines Sekundärkreises, der eine Magnetfeldsensoreinheit 13b, die ortsfest um das weichmagnetische Element an der Rotorwelle 14 angeordnet sind, umfasst, kann nun die räumliche Orientierung des sich durch das weichmagnetische Element einstellenden Sensormagnetfelds erfasst und entsprechende Messsignale bereitgestellt werden. Die Magnetfeldsensoreinheit 13b kann einen oder mehrere Magnetfeldsensoren umfassen, wie z. B. GMR-Sensoren, Hall-Sensoren und dergleichen. Bei mehreren Magnetfeldsensoren können diese gegeneinander rotiert sein, um zusätzlich zur Rotorlage auch eine Drehrichtungsinformation zu erhalten. Durch Auswertung der erfassten Messsignale kann die Rotorlage in an sich bekannter Weise abgeleitet werden.

Das zweite Steuergerät 120 ist ebenfalls mit dem Sekundärkreis der Magnetfeldsensoreinheit 13b des Lagesensors 13 verbunden und führt eine entsprechende Auswertung der Messsignale der Magnetfeldsensoreinheit 13b aus, um die Rotorlage zu erfassen. Zusätzlich weist das zweite Steuergerät 120 eine Messeinheit 122, insbesondere eine Spannungsmesseinheit auf, um Phasenspannungen an den Phasensträngen des zweiten Wicklungskreises 11b zu messen und gemäß an sich bekannter Verfahren eine Ermittlung der Rotorlage ohne Verwendung eines Lagesensors durchzuführen. Gängige Verfahren werten dazu Zeitpunkte von Nulldurchgängen von Induktionsspannungen in den Phasensträngen aus, wie z. B. bei dem Back-EMF-Verfahren.

Beiden Steuergeräten 110, 120 wird von einem Stellgrößenblock 130 eine erste und zweite Stellgröße K1, K2 vorgegeben, die ein Teildrehmoment zur Bereitstellung durch die jeweilige Teilmaschine vorgibt. Die jeweilige Stellgröße K1, K2 wird in den Steuergeräten 110, 120 entsprechend eines Kommutierungsschemas in Phasenspannungen zum Anlegen an die Phasenstränge der jeweiligen Wicklungskreise 11a, 11b gewandelt und die Teilmaschinen entsprechend betrieben. Der Stellgrößenblock 130 empfängt eine externe Vorgabe z.B. von einer autonomen Fahrfunktion und teils die Vorgabe in die Vorgaben für die Teildrehmomente auf.

Das erste und das zweite Steuergerät 110, 120 sind über eine Testleitung 16 verbunden, über die ein Testsignal T von dem ersten Steuergerät 110 an das zweite Steuergerät 120 bereitgestellt wird. Das Testsignal T wird von einer Testschaltung 111 in dem ersten Steuergerät 110 in definierter Weise bereitgestellt und kann ein kontinuierlich sich in festen Zeitabständen veränderndes, insbesondere periodisches Triggersignal sein. Die Testschaltung 111 ist ausgebildet, die Funktionsfähigkeit des ersten Steuergeräts 110 in geeigneter und an sich bekannter Weise zu überprüfen, indem eine oder mehrere der Steuergerätefunktionen getestet werden, und das Testsignal T auszugeben, solange eine ordnungsgemäße Funktion festgestellt wird.

Das zweite Steuergerät 120 weist eine Testsignalempfangsschaltung 121 auf, die mit der Testleitung 16 verbunden ist und das Testsignal T empfangen kann. Auf diese Weise kann das zweite Steuergerät 120 durch Feststellen eines Vorhandenseins oder Nicht-Vorhandenseins des Testsignals T, ob das erste Steuergerät 110 ordnungsgemäß arbeitet oder nicht.

Das Ansteuersignal, das von dem ersten Steuergerät 110 zur Ansteuerung des Primärkreises des Lagesensors 13 generiert wird, kann als ein Wechselsignal mit einer Frequenz bereitgestellt werden. Zur Auswertung der Messsignale der Magnetfeldsensoreinheit 13b in dem zweiten Steuergerät kann das Testsignal T entsprechend der Frequenz des Ansteuersignals moduliert werden, so dass mithilfe des Testsignals T die Messsignale der Magnetfeldsensoreinheit 13b ausgewertet werden können. Auch kann die Frequenz in anderer Weise von dem ersten Steuergerät 110 zu dem zweiten Steuergerät 120 übertragen werden.

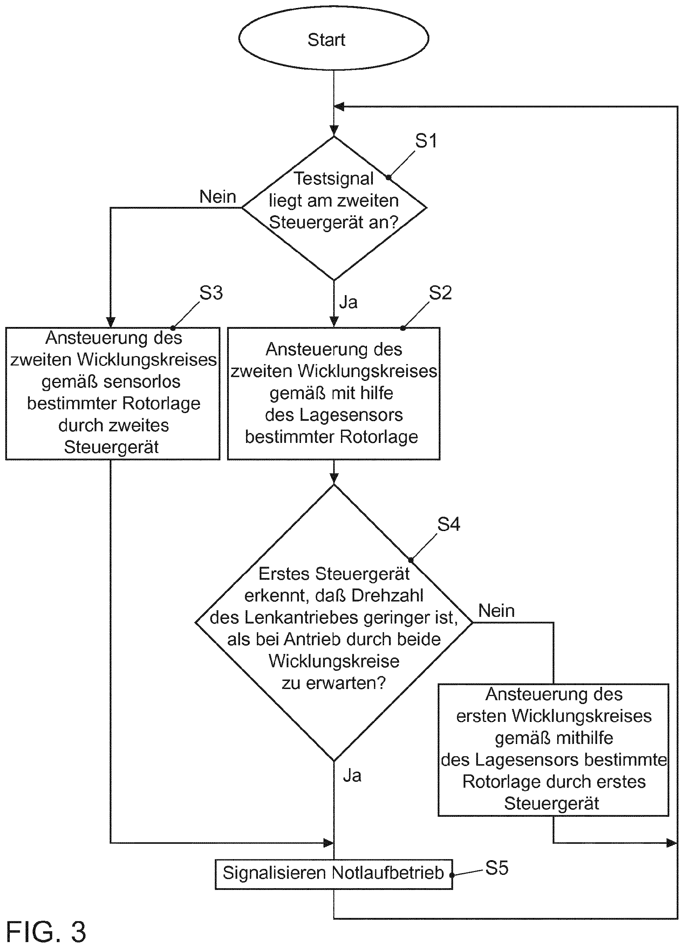

Um eine Ausfallsicherheit bereitzustellen, wird in den Steuergeräten 110, 120 ein Verfahren ausgeführt, wie es durch das Flussdiagramm der Figur 3 näher erläutert wird.

In Schritt S1 wird durch die zweite Steuereinheit 120 überprüft, ob das Testsignal T anliegt und dem gewünschten Verlauf des Testsignals T entspricht. Wird festgestellt, dass das Testsignal T anliegt (Alternative. Ja), kann die zweite Steuereinheit 120 davon ausgehen, dass das erste Steuergerät 110 ordnungsgemäß funktioniert und sich entsprechend auf die Angaben der Messsignale der Magnetfeldsensoreinheit 13b des Lagesensors 13 verlassen kann.

Entsprechend kann in Schritt S2 eine Kommutierung des zweiten Wicklungskreises 11b zur Bereitstellung des durch die erste Stellgröße K1 geforderten Drehmoments durch das zweite Steuergerät 120 vorgenommen werden. Dazu wird die Rotorlage durch Auswertung der Messsignale von dem Lagesensor 13 bestimmt und für die Bestimmung eines aktuell anzulegenden Kommutierungsmusters bestimmt. Danach wird das Verfahren mit Schritt S4 fortgesetzt.

Wird in Schritt S1 festgestellt, dass das Testsignal T nicht länger von dem ersten Steuergerät 110 bereitgestellt wird (Alternative: Nein), wird auf eine Fehlfunktion in dem ersten Steuergerät 110 geschlossen. Wird eine Fehlfunktion des ersten Steuergerätes 110 festgestellt, so wird in Schritt S3 eine Betriebsart in dem zweiten Steuergerät 120 umgeschaltet und die Messsignale von dem Lagesensor 13 nicht länger berücksichtigt. Stattdessen wird eine sensorlose Lageerfassung aktiviert, die basierend auf Phasenspannungen des zweiten Wicklungskreises 11b die Rotorlage schätzt, um so eine ordnungsgemäße Ansteuerung gemäß dem Kommutierungsschema durch das zweite Steuergerät 120 zu gewährleisten. Durch den sensorlosen Betrieb des zweiten Wicklungskreises 11b des Lenkantriebmotors 11 sind Einschränkungen in Haptik und Leistung zu erwarten, da der sensorlose Betrieb insbesondere bei geringen Drehzahlen nur sehr ungenau möglich ist. Jedoch soll nach Auftreten des Fehlers in dem ersten Steuergerät 110 ein Weiterbetrieb des Lenksystems 1 nur für eine kurze Zeitdauer bis zur Übernahme der Lenkung durch den Fahrer oder bis zum Stillstand des Kraftfahrzeugs gewährleistet werden, so dass Einschränkungen der Funktionalität in Kauf genommen werden können. Weiterhin wird das Verfahren mit Schritt S5 fortgesetzt und ein Notlaufbetrieb an die autonome Fahrfunktion signalisiert.

Das erste Steuergerät 110 überprüft in Schritt S4 den basierend auf der Stellgröße K1 durch den ersten Wicklungskreis 11a angelegten Motorstrom und plausibilisiert diesen anhand der Winkelgeschwindigkeit, d. h. der Ableitung der erfassten Rotorlagen. Wird dabei festgestellt, dass sich der Lenkantriebsmotor 11 nicht innerhalb eines zu erwartenden Toleranzbandes der Winkelgeschwindigkeit bewegt, kann dadurch das erste Steuergerät 110 feststellen, dass das zweite Steuergerät 120 nicht ordnungsgemäß arbeitet und nicht für die Bereitstellung des zweiten Teilantriebsmoments sorgt. Wird dies festgestellt (Alternative: Ja), erfolgt in Schritt S5 das Signalisieren eines Notlaufbetriebs an die autonome Fahrfunktion, durch die der Fahrer z. B. zur Übernahme der Lenkung aufgefordert werden kann oder das Kraftfahrzeug im autonomen Fahrbetrieb sicher zum Stillstand gebracht wird.

Andernfalls (Alternative: Nein) wird kein Fehler in einem der Steuergeräte 110, 120 erkannt und in Schritt S6 eine Kommutierung des ersten Wicklungskreises 11a zur Bereitstellung des durch die erste Stellgröße K1 geforderten Drehmoments durch das erste Steuergerät 120 vorgenommen werden.

Es kann vorgesehen sein, dass das erste Steuergerät 110 bei Ausfall des zweiten Steuergeräts 120 das entsprechend der Stellgröße K1 bereitzustellende Teildrehmoment der ersten Teilmaschine 11a erhöht. Analog kann vorgesehen sein, dass das zweite Steuergerät 120 bei Ausfall des ersten Steuergeräts 110 das entsprechend der Stellgröße K2 bereitzustellende Teildrehmoment der zweiten Teilmaschine 11b erhöht. Die Erhöhung kann kurzfristig erfolgen, bis die autonome Fahrfunktion abgeschaltet ist, d.h. der Fahrer hat die Lenkung übernommen oder das Fahrzeug ist im Stillstand. Während dieser Zeit kann eine temporäre Überlastung der ersten Teilmaschine zugelassen werden

Die Steuergeräte 110, 120 und die Wicklungskreise 11a, 11b der Teilmaschinen sind so ausgebildet, dass das durch die Wicklungskreise 11a, 11b entsprechend der Stellgrößen K1, K2 bereitzustellende Stellmoment ausreichend groß ist, um einen autonomen Fahrbetrieb für zumindest eine vorbestimmte Zeitdauer aufrechtzuerhalten. Insbesondere können die Teilantriebsmomente jeweils dem halben Gesamtantriebsmoment entsprechen.

Bei anderen Konfigurationen kann vorgesehen sein, das Lenkantriebssystem 15 mit mehr als zwei Steuergeräten auszubilden, um die Redundanz zu erhöhen.

### Bezugszeichenliste

- 1: Lenksystem
- 2: Lenksäule
- 3: Lenkrad
- 4: Ritzel
- 5: Zahnstange
- 6: gelenkte Räder
- 7: Lenkantrieb
- 8: Drehmomentsensor
- 9: Lenkwinkelsensor
- 10: Lenkungssteuersystem
- 110, 120: Steuergeräte
- 111: Testschaltung
- 121: Testsignalempfangsschaltung
- 122: Messeinheit
- 11: Lenkantriebsmotor
- 11a,11b: Wicklungskreise
- 12: Phasenwicklungen
- 13: Lagesensors
- 13a: Magnetspule
- 13b: Magnetfeldsensoreinheit
- 14: Rotorwelle
- 15: Lenkantriebssystem
- 16: Testleitung
- AS: Lenkeingriffsgröße
- LV: Lenkeingriffsvorgabe
- HM: Handmomentenangabe

## Patentansprüche

1. Lenkantriebssystem (15) für ein Lenksystem (1) eines Kraftfahrzeugs, umfassend:
- ein erstes Steuergerät (110) zum Ansteuern eines ersten Wicklungskreises (11a) eines Lenkantriebsmotors (11) mit einer Testschaltung (111), die ausgebildet ist, ein definiertes wechselndes, insbesondere ein periodisches Testsignal (T) bereitzustellen;
- ein zweites Steuergerät (120) zum Ansteuern eines zweiten Wicklungskreises (11b) des Lenkantriebsmotors (11) wobei eine Testsignalempfangsschaltung (121) des zweiten Steuergeräts (120) ausgebildet ist, das Testsignal (T) zu empfangen, wobei das zweite Steuergerät (120) ausgebildet ist, den Lenkantriebsmotor (11) abhängig von dem definierten Testsignal (T) anzusteuern,
- wobei ein Lagesensor (13) zur Erfassung der Rotorlage vorgesehen ist, wobei der Lagesensor (13) einen Primärkreis, durch den mithilfe eines Ansteuersignals ein Magnetfeld in einem mit einem Rotor (14) des Lenkantriebsmotors (11) verbundenen weichmagnetischen Element eingeprägt wird, und einen Sekundärkreis aufweist, der mindestens eine Magnetfeldsensoreinheit (13b) aufweist,
- wobei das erste und das zweite Steuergerät (110,120) mit dem Lagesensor (13) verbunden sind, um jeweils eine Lageinformation zu empfangen, wobei das erste und das zweite Steuergerät (110, 120) ausgebildet sind, eine Ansteuerung des jeweiligen Wicklungskreises (11a, 11b) abhängig von einer ermittelten Lageinformation, insbesondere durch Bereitstellen eines rotorlageabhängigen Kommutierungsmusters, auszuführen,
- wobei das erste Steuergerät (110) ausgebildet ist, um das Ansteuersignal für den Primärkreis des Lagesensors (13) bereitzustellen, und wobei das erste und das zweite Steuergerät (110, 120) mit der mindestens einen Magnetfeldsensoreinheit (13b) verbunden sind, um die Lageinformation zu erfassen.

2. Lenkantriebssystem (15) nach Anspruch 1, wobei das zweite Steuergerät (120) eine Messeinheit (122) aufweist, um eine elektrische Größe bezüglich Phasensträngen des zweiten Wicklungskreises (11b) zu erfassen und eine sensorlose Ermittlung der Rotorlage auszuführen, um eine entsprechende Lageinformation bereitzustellen.

3. Lenkantriebssystem (15) nach Anspruch 2, wobei das zweite Steuergerät (120) weiterhin ausgebildet ist, um abhängig von einem Vorliegen oder einem Nicht-Vorliegen des definierten Testsignals (T) die Ansteuerung des zweiten Wicklungskreises (11b) basierend auf der von dem Lagesensor (13) erfassten Lageinformation oder auf der durch die sensorlose Ermittlung der Rotorlage bestimmten Lageinformation auszuführen.

4. Lenkantriebssystem (15) nach Anspruch 1, wobei die Testschaltung (111) ausgebildet ist, das Testsignal (T) bereitzustellen, wenn das Ansteuersignal für den Lagesensor (13) durch das erste Steuergerät (110) bereitgestellt wird, und das Testsignal (T) nicht bereitzustellen, wenn das Ansteuersignal für den Lagesensor (13) durch das erste Steuergerät (110) nicht bereitgestellt wird.

5. Lenkantriebssystem (15) nach Anspruch 4, wobei das periodische Testsignal (T) mit einer Frequenz und/oder Phasenlage bereitgestellt wird, die einer Frequenz bzw. Phasenlage des Ansteuersignals für den Primärkreis des Lagesensors (13) entspricht, so dass die Erfassung der Rotorlage in dem zweiten Steuergerät (120) basierend auf der Frequenz bzw. Phasenlage des Ansteuersignals durchgeführt wird.

6. Lenkantriebssystem (15) nach einem der Ansprüche 1 bis 5, wobei das erste und das zweite Steuergerät (110, 120) ausgebildet sind, um die Ansteuerung des jeweiligen Wicklungskreises (11a, 11b) basierend auf einer jeweiligen vorgegebenen Stellgröße (K1, K2) durchzuführen.

7. Lenkantriebssystem (15) nach Anspruch 6, wobei das erste Steuergerät (110) ausgebildet ist, eine Fehlfunktion des zweiten Steuergeräts (120) festzustellen, indem das durch die entsprechende Stellgröße (K1) vorgegebene Drehmoment zu einem Verlauf der Drehzahl des Lenkantriebsmotors (11) plausibilisiert wird.

8. Lenksystem (1) für ein Kraftfahrzeug mit einem Lenkantriebssystem (15) gemäß einem der vorangehenden Ansprüche

9. Verfahren zum Betreiben eines Lenkantriebssystems (15) nach einem der Ansprüche 1 bis 6, mit folgenden Schritten:
- Bereitstellen eines definierten wechselnden, insbesondere periodischen Testsignals (T) durch das erste Steuergerät (110);
- Empfangen des Testsignals (T) durch das zweite Steuergerät (120); und
- Ansteuern des Lenkantriebsmotors (11) durch das zweite Steuergerät (120) abhängig von dem definierten Testsignal (T).

## Claims

1. A steering drive system (15) for a steering system (1) of a motor vehicle, comprising:
- a first control device (110) for actuating a first winding circuit (11a) of a steering drive motor (11) with a test circuit (111) which is designed to provide a defined alternating, in particular a periodic, test signal (T);
- a second control device (120) for actuating a second winding circuit (11b) of the steering drive motor (11), wherein a test signal receiving circuit (121) of the second control device (120) is designed to receive the test signal (T), wherein the second control device (120) is designed to actuate the steering drive motor (11) depending on the defined test signal (T),
- wherein a position sensor (13) for detecting the rotor position is provided, wherein the position sensor (13) has a primary circuit via which, with the assistance of an actuation signal, a magnetic field is impressed in a soft magnetic element connected to a rotor (14) of the steering drive motor (11), and has a secondary circuit which has at least one magnetic field sensor unit (13b),
- wherein the first and second control devices (110, 120) are connected to the position sensor (13) in order to respectively receive position information, wherein the first and second control devices (110, 120) are designed to execute an actuation of the respective winding circuit (11a, 11b) depending on a determined position information, in particular by providing a rotor position-dependent commutation pattern,
- wherein the first control device (110) is designed to provide the actuation signal for the primary circuit of the position sensor (13), and wherein the first and second control device (110, 120) are connected to the at least one magnetic field sensor unit (13b) in order to detect the position information.

2. The steering drive system (15) according to Claim 1, wherein the second control device (120) has a measurement unit (122) to detect an electrical variable regarding phase elements of the second winding circuit (11b), and to execute a sensorless determination of the rotor position in order to provide corresponding position information.

3. The steering drive system (15) according to Claim 2, wherein the second control device (120) is furthermore designed to execute the actuation of the second winding circuit (11b) based on the position information detected by the position sensor (13), or on the position information determined by the sensor-less determination of the rotor position, depending on a presence or absence of the defined test signal (T).

4. The steering drive system (15) according to Claim 1, wherein the test circuit (111) is designed to provide the test signal (T) when the actuation signal for the position sensor (13) is provided by the first control device (110), and to not provide the test signal (T) when the actuation signal for the position sensor (13) is not provided by the first control device (110).

5. The steering drive system (15) according to Claim 4, wherein the periodic test signal (T) is provided with a frequency and/or phase position corresponding to a frequency or phase position of the actuation signal for the primary circuit of the position sensor (13), so that the detection of the rotor position in the second control device (120) is performed based on the frequency or phase position of the actuation signal.

6. The steering drive system (15) according to any one of Claims 1 to 5, wherein the first and second control devices (110, 120) are designed to perform the actuation of the respective winding circuit (11a, 11b) based on a respective predetermined manipulated variable (K1, k2).

7. The steering drive system (15) according to Claim 6, wherein the first control device (110) is designed to determine a malfunction of the second control device (120), in that the torque specified by the corresponding manipulated variable (K1) is checked in terms of its plausibility with respect to a curve of the rotational speed of the steering drive motor (11).

8. A steering system (1) for a motor vehicle having a steering drive system (15) according to any of the preceding claims

9. A method for operating a steering drive system (15) according to any of Claims 1 to 6, having the following steps:
- providing a defined alternating, in particular periodic, test signal (T) via the first control device (110);
- receiving the test signal (T) via the second control device (120); and
- controlling the steering drive motor (11) via the second control device (120), depending on the defined test signal (T).

## Revendications

1. Système d'entraînement de direction (15) pour un système de direction (1) d'un véhicule à moteur, comprenant :
- un premier contrôleur (110) pour la commande d'un premier circuit d'enroulement (11a) d'un moteur d'entraînement de direction (11) comprenant un circuit de test (111), conçu pour fournir un signal de test (T) variable, en particulier périodique, défini ;
- un deuxième contrôleur (120) pour la commande d'un deuxième circuit d'enroulement (11b) du moteur d'entraînement de direction (11), dans lequel un circuit de réception de signaux de test (121) du deuxième contrôleur (120) est conçu pour recevoir le signal de test (T), dans lequel le deuxième contrôleur (120) est conçu pour commander le moteur d'entraînement de direction (11) en fonction du signal de test défini (T),
- dans lequel un capteur de position (13) pour détecter la position du rotor est prévu, dans lequel le capteur de position (13) comporte un circuit primaire, par le biais duquel, au moyen d'un signal de commande, un champ magnétique est appliqué dans un élément faiblement magnétique relié à un rotor (14) du moteur d'entraînement de direction (11) et un circuit secondaire, qui comporte au moins une unité de capteur de champ magnétique (13b),
- dans lequel le premier et le deuxième contrôleurs (110, 120) sont reliés au capteur de position (13), afin de recevoir respectivement une information de position, dans lequel le premier et le deuxième contrôleurs (110, 120) sont conçus pour réaliser une commande du circuit d'enroulement (11a, 11b) respectif en fonction d'une information de position déterminée, en particulier par mise à disposition d'un modèle de commutation dépendant du rotor,
- dans lequel le premier contrôleur (110) est conçu pour mettre à disposition le signal de commande pour le circuit primaire du capteur de position (13) et dans lequel le premier et le deuxième contrôleurs (110, 120) sont reliés à l'au moins une unité de capteur de champ magnétique (13b) pour détecter l'information de position.

2. Système d'entraînement de direction (15) selon la revendication 1, dans lequel le deuxième contrôleur (120) comporte une unité de mesure (122), afin de détecter une grandeur électrique relative à des conducteurs de phase du deuxième circuit d'enroulement (11b) et pour réaliser une détermination sans capteur de la position de rotor, afin de mettre à disposition une information de position correspondante.

3. Système d'entraînement de direction (15) selon la revendication 2, dans lequel le deuxième contrôleur (120) est en outre conçu pour réaliser, en fonction de la présence ou de l'absence du signal de test (T) défini, la commande du deuxième circuit d'enroulement (11b) sur la base de l'information de position détectée par le capteur de position (13) ou de l'information de position déterminée par la détermination sans capteur de la position du rotor.

4. Système d'entraînement de direction (15) selon la revendication 1, dans lequel le circuit de test (111) est conçu pour mettre à disposition le signal de test (T) lorsque le signal de commande pour le capteur de position (13) est mis à disposition par le biais du premier contrôleur (110) et ne pas mettre à disposition le signal de test (T) lorsque le signal de commande pour le capteur de position (13) n'est pas mis à disposition par le biais du premier contrôleur (110).

5. Système d'entraînement de direction (15) selon la revendication 4, dans lequel le signal de test (T) périodique est mis à disposition avec une fréquence et/ou une position de phase, qui correspond à une fréquence ou une position de phase du signal de commande pour le circuit primaire du capteur de position (13), de sorte que la détection de la position de rotor dans le deuxième contrôleur (120) soit réalisée sur la base de la fréquence ou la position de phase du signal de commande.

6. Système d'entraînement de direction (15) selon l'une quelconque des revendications 1 à 5, dans lequel le premier et le deuxième contrôleurs (110, 120) sont conçus pour réaliser la commande du circuit d'enroulement (11a, 11b) respectif sur la base d'une grandeur de réglage (K1, K2) prédéfinie respective.

7. Système d'entraînement de direction (15) selon la revendication 6, dans lequel le premier contrôleur (110) est conçu pour identifier un dysfonctionnement du deuxième contrôleur (120) en ce que la plausibilité du couple prédéfini par la grandeur de réglage (K1) correspondante est établie par une course de la vitesse de rotation du moteur d'entraînement de direction (11).

8. Système de direction (1) pour un véhicule à moteur comprenant un système d'entraînement de direction (15) selon l'une quelconque des revendications précédentes

9. Procédé pour faire fonctionner un système d'entraînement de direction (15) selon l'une quelconque des revendications 1 à 6, comprenant les étapes suivantes :
- mise à disposition d'un signal de test (T) variable, en particulier périodique, par le biais du premier contrôleur (110) ;
- réception du signal de test (T) par le biais du deuxième contrôleur (120) ; et
- commande du moteur d'entraînement de direction (11) par le biais du deuxième contrôleur (120) en fonction du signal de test (T) défini.
